# EUROPÄISCHE PATENTSCHRIFT

(11) **EP 2 946 132 B1**
(45) Veröffentlichungstag und Bekanntmachung des Hinweises auf die Patenterteilung: **16.09.2020**
(21) Anmeldenummer: 14700542.5
(22) Anmeldetag: 15.01.2014
(51) Int. Cl.: F16H 57/04, F16H 57/027

(54) **ANTRIEB**
DRIVE
ENTRAÎNEMENT

(30) Priorität: 21.01.2013 DE 102013000849
(43) Veröffentlichungstag der Anmeldung: 25.11.2015
(73) Patentinhaber: SEW-EURODRIVE GmbH & Co. KG, 76646 Bruchsal (DE)
(72) Erfinder: TRIEBSWETTER, Andreas, 76646 Bruchsal (DE)
(86) Internationale Anmeldenummer: PCT/EP2014/000076
(87) Internationale Veröffentlichungsnummer: WO 2014/111250

(56) Entgegenhaltungen:
- WO-A1-83/00207
- DE-A1- 4 134 553
- DE-A1- 10 122 993
- DE-A1- 10 312 941
- JP-A- 2001 330 110
- JP-A- 2008 232 269
- JP-A- 2008 232 270
- US-A- 4 595 118
- US-A- 6 058 793
- US-A1- 2012 238 390

## Beschreibung

Die Erfindung betrifft einen Antrieb.

Es ist allgemein bekannt, dass als Antrieb ein Getriebemotor verwendbar ist, wobei das Getriebe mit Schmieröl befüllt ist.

**Aus der** US 6 058 793 A **ist ein Parallelwellengetriebe bekannt, bei dem ein Lager der abtreibenden Welle oberhalb des Ölpegels angeordnet ist.**

**Aus der** JP 2001 330110 A **ist ein Getriebemotor in Vertikalausrichtung gezeigt.**

**Aus der** JP 2008 232270 **A1ist ein Getriebe mit Puffertank gezeigt.**

**Aus der** WO 83/00207 A1 **ist ein allgemeines Ölpegel-Aufrechterhaltungsmittel offenbart.**

**Aus der** DE 41 34 553 A1 **ist ein von einem Elektromotor angetriebenes Planeten-Zahnradgetriebe bekannt.**

**Aus der** DE 103 12 941 A1 **ist ein Bausatz für eine Baureihe von Getriebemotoren offenbart.**

**Aus** der JP 2008 232269 A **ist ein** elektrischer Antrieb bekannt.

**Aus** der US 2012/238390 A ist ein Getriebe mit Ölversorgung **bekannt.**

**Aus der** DE 101 22 993 A ist eine Vorrichtung zum Verschließen einer Öffnung in einer **Gehäusewand bei einem Gehäuse bekannt.**

**Aus der** US 4 595 118 A **ist eine Entlüftung bei einem Ölgehäuse bekannt.**

Der Erfindung liegt daher die Aufgabe zugrunde, einen Antrieb weiterzubilden, wobei verschiedene Arbeitstemperaturen ausführbar sein sollen.

Erfindungsgemäß wird die Aufgabe bei dem Antrieb nach den in Anspruch 1 oder 2 angegebenen Merkmalen gelöst.

Bevorzugte Merkmale ergeben sich aus den abhängigen Ansprüchen.

Die Erfindung wird nun anhand von Abbildungen näher erläutert:
In der Figur 1 ist eine teilweise angeschnittene Ansicht eines erfindungsgemäßen Antriebs gezeigt.
In der Figur 2 ist eine andere erfindungsgemäße Ausführungsform gezeigt.
In der Figur 3 ist das erfindungsgemäße Schema, welches der Figur 2 zugrunde liegt abstrahiert dargestellt.

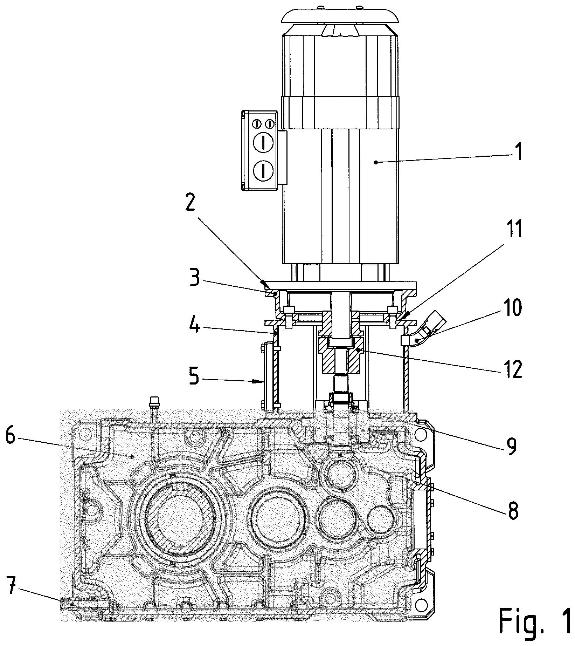

**Wie in der** **Figur 1** **gezeigt,** weist der erfindungsgemäße Antrieb einen Elektromotor 1 auf, der über einen Adapter an ein Getriebe 6 angeschlossen ist.

Der Adapter weist zwei Gehäuseteile auf, nämlich den Motoradapter 3 und den Getriebeadapter 4, welche miteinander verbunden sind. Zur Verbindung sind Schraubverbindungen eingesetzt, wobei eine zwischen Motoradapter und Getriebeadapter 4 angeordnete Dichtung, insbesondere O-Ring oder Flachdichtung, die Öldichtheit herstellt.

Ebenso wird das Motorgehäuse mit dem Motoradapter 3 öldicht schraubverbunden.

Das Getriebegehäuse ist ebenfalls schraubverbunden mit dem Adaptergehäuse 4, wobei wiederum eine Dichtung, insbesondere O-Ring oder Flachdichtung, zwischengeordnet ist.

Der Adapter weist eine Kupplung auf, die vom Motoradapter 3 und/oder Getriebeadapter 4 zumindest teilweise geschützt umgeben ist. Die Kupplung ist als Klauenkupplung ausgeführt, wobei zwischen den Klauen ein Kunststoff-Stern zwischengeordnet ist. Die Strahlen des Sterns sind also in Umfangsrichtung zwischen den Klauen der beiden Kupplungsteile angeordnet.

Somit treibt die Rotorwelle des Motors 1 über die Kupplung die eintreibende Welle des Getriebes an, welche eine Verzahnung 8 aufweist.

Die eintreibende Welle ist über ein Lager 9 im Getriebeadapter 4 gelagert. Das Lager 9 ist dabei das in Gravitationsrichtung höchst gelegene Lager des Getriebes.

Das Getriebe 6 ist mit Schmieröl befüllt, wobei der Ölpegel derart hoch vorgesehen wird, dass das in Gravitationsrichtung höchst gelegene Lager 9 des Getriebes 6 unterhalb des Ölpegels angeordnet ist.

Unten ist am Getriebe 6 ein Ölablass 7 angeordnet, durch den das Öl ablassbar ist oder einfüllbar ist.

Eine Dichtung zwischen dem Getriebeinneren und dem Innenraum des Adapters ist bei der Erfindung nicht notwendig. Denn der Adapter fungiert auch als Ölausgleichsbehälter. Dehnt sich das Öl thermisch bedingt aus, steigt der Ölpegel im Getriebeadapter etwas an, bleibt aber immer noch innerhalb des Adapters.

Bei Betrieb des Getriebes tritt auch Ölschaum auf und es wird Öl herumgespritzt. Somit wird sogar die Kupplung vom Öl benetzt.

Am oberen, also dem Motor 1 zugewandten, Rand des Adapters ist eine Entlüftung 10 angeordnet.

Diese Entlüftung 10 weist an ihrer dem Innenraum des Adapters zugewandten Endbereich einen Spritzschutz auf. Vorzugsweise wird dieser durch ein Blech realisiert, das ein geradliniges Hereinfliegen von Öltröpfchen in die rohrförmige Entlüftung 10 verhindert. Außerdem weist die Entlüftung mittig oder an ihrem anderen Endbereich eine Membran auf, die einen Luftaustausch ermöglicht, nicht jedoch einen Flüssigkeitsaustausch. Insbesondere wird ein Durchdringen der Membran von Öl oder Wasser verhindert. Hierzu ist das Material der Membran oleophob und/oder lipophob und hydrophob.

Am Adapter ist auch ein Sichtfenster 5 angeordnet, mit dem der Ölstand kontrollierbar ist.

Das Fenster 5 deckt eine Ausnehmung des Getriebeadapters 4 ab und ist mit dem Getriebeadapter 4 öldicht verbunden, insbesondere schraubverbunden mit zwischengeordneter Dichtung, insbesondere O-Ringdichtung oder Flachdichtung.

Durch die Aufteilung des Adapters in Motoradapter 3 und Getriebeadapter 4 ist ermöglicht, dass eine motorseitige Schnittstelle geschaffen ist, an der verschiedene Motoren verbindbar sind und dass eine getriebeseitige Schnittstelle geschaffen ist, an der verschiedene Getriebe verbindbar sind.

Die Schnittstelle zwischen Motoradapter 3 und Getriebeadapter 4 bleibt jedoch für alle Varianten, also Getriebe- Motor-Kombinationen, gleich. Dabei umfasst die Schnittstelle ein Zentriermittel, wie Zentrierbund oder dergleichen, ein Bohrbild für Verbindungsschrauben und eine Dichtungsanordnung.

Beispielsweise ist ein erster Motor 1 größer als ein zweiter Motor 1, wobei jeder der Motoren 1 an einen jeweiligen Motoradapter 3 verbunden wird, der zum Getriebeadapter 4 jeweils eine gleichartige Schnittstelle aufweist, zum jeweiligen Motor 1 jedoch eine verschiedenartige Schnittstelle, so dass der jeweilige Motor 1 verbindbar ist.

Ebenso ist ein erstes Getriebe 6 größer als ein zweites Getriebe 6, wobei jedes der Getriebe 6 an einen jeweiligen Getriebeadapter 4 verbunden wird, der zum Motoradapter 3 jeweils eine gleichartige Schnittstelle aufweist, zum jeweiligen Getriebe 6 jedoch eine verschiedenartige Schnittstelle, so dass der jeweilige Motor 1 verbindbar ist.

Insgesamt sind im Beispiel somit vier Getriebe-Motor-Kombinationen ausführbar.

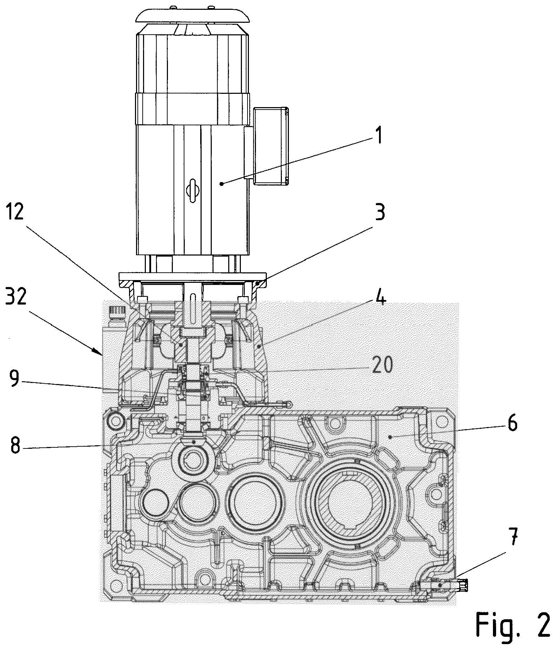

**Wie in** **Figur 2** **gezeigt,** ist im Unterschied zur Figur 1 bei dem entsprechenden erfindungsgemäßen Ausführungsbeispiel am Adapter ein Ölausgleichsbehälter 32 angeordnet, insbesondere angeschraubt.

Außerdem ist eine Abdichtung 20 zwischen dem höchst gelegenen Lager 9 des Getriebes 6, also dem Lager 9 der eintreibenden Welle des Getriebes, angeordnet.

Wie in der Figur 2 gezeigt, weist der erfindungsgemäße Antrieb einen Elektromotor 1 auf, der wiederum über einen Adapter an ein Getriebe 6 angeschlossen ist.

Der Adapter weist wiederum zwei Gehäuseteile auf, nämlich den Motoradapter 3 und den Getriebeadapter 4, welche miteinander verbunden sind. Zur Verbindung sind Schraubverbindungen eingesetzt, wobei keine zwischen Motoradapter 3 und Getriebeadapter 4 angeordnete Dichtung vorgesehen werden muss.

Ebenso muss das Motorgehäuse mit dem Motoradapter 3 nicht öldicht schraubverbunden sein.

Das Getriebegehäuse ist ebenfalls wiederum schraubverbunden mit dem Adaptergehäuse 4, wobei wiederum keine Dichtung, insbesondere O-Ring oder Flachdichtung, zwischengeordnet werden muss.

Der Adapter weist eine Kupplung auf, die vom Motoradapter 3 und/oder Getriebeadapter 4 zumindest teilweise geschützt umgeben ist. Die Kupplung ist als Klauenkupplung ausgeführt, wobei zwischen den Klauen ein Kunststoff-Stern zwischengeordnet ist. Die Strahlen des Sterns sind also in Umfangsrichtung zwischen den Klauen der beiden Kupplungsteile angeordnet.

Somit treibt die Rotorwelle des Motors 1 über die Kupplung die eintreibende Welle des Getriebes an, welche eine Verzahnung 8 aufweist.

Die eintreibende Welle ist über ein Lager 9 im Getriebeadapter 4 gelagert. Das Lager 9 ist dabei das in Gravitationsrichtung höchst gelegene Lager des Getriebes.

Das Getriebe 6 ist mit Schmieröl befüllt, wobei der Ölpegel derart hoch vorgesehen wird, dass das in Gravitationsrichtung höchst gelegene Lager 9 des Getriebes 6 unterhalb des Ölpegels angeordnet ist.

Unten ist am Getriebe 6 ein Ölablass 7 angeordnet, durch den das Öl ablassbar ist oder einfüllbar ist.

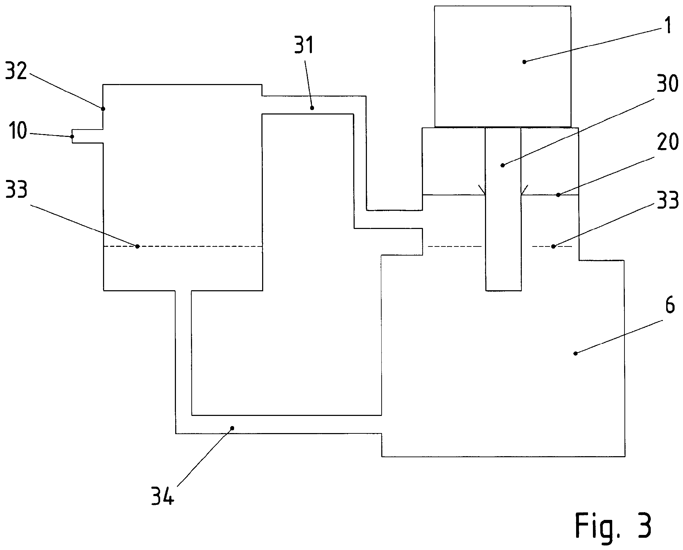

Wie in Figur 2 gezeigt und in Figur 3 noch klarer erkennbar, ist eine Dichtung 20 zwischen dem Getriebeinneren und dem Innenraum des Adapters angeordnet. Diese umfasst vorteiligerweise einen Wellendichtring, so dass die eintreibende Welle gegen das Gehäuse, insbesondere des Getriebes 6 oder des Adapters, abgedichtet ist.

Vom Getriebeinneren führt eine Verbindungsleitung 34 für Öl zum Ölausgleichsbehälter 32, so dass dieser mit dem Schmieröl des Getriebes im Austausch steht, insbesondere nach dem Prinzip der kommunizierenden Röhre.

In Gravitationsrichtung oberhalb des höchst gelegenen Lagers 9 und unterhalb der Dichtung 20, also oberhalb des Ölpegels 33, ist ein Luftbereich vorgesehen, in welchen eine Verbindungsleitung 31 für Luft mündet, welche auch in den Ölausgleichsbehälter führt und dort oberhalb des dortigen Ölpegels 33 in den Ölausgleichsbehälter 32 mündet.

Ebenso ist wiederum eine Entlüftung 10 vorgesehen, die vom Innenluftbereich des Ölausgleichsbehälters 32 in den Außenbereich mündet, wobei wiederum eine Membran und ein Spritzschutzteil von der Entlüftung 10 umfasst ist.

Dehnt sich das Öl thermisch bedingt aus, steigt der Ölpegel im Getriebe etwas an, so dass der Ölpegel vom höchst gelegenen Lager 9 höher steigt, sich also weiter entfernt. Wegen des Prinzips der kommunizierenden Röhre steigt der Ölpegel 33 auch im Ölausgleichsbehälter 32 an. Der Luftdruck im Innenluftbereich des Ölausgleichsbehälters und des Getriebeadapters beziehungsweise Getriebes 6 ist gleich, da er über die Verbindungsleitung 31 ausgeglichen ist. Außerdem gleicht dieser Luftdruck im Wesentlichen dem Luftdruck der Umgebung, weil der Innenluftbereich mit dem Außenbereich in Austausch steht über die Entlüftung 10. Dabei ist nur die luftdurchlässige Membran zwischengeordnet.

Bei Betrieb des Getriebes bleibt der Ölschaum und ebenso herumgespritztes Öl unterhalb der Dichtung 20. Insbesondere wird also die Kupplung vom Öl nicht benetzt.

Die Entlüftung 10 weist an ihrer dem Innenraum des Ölausgleichsbehälters 32 zugewandten Endbereich einen Spritzschutz auf. Vorzugsweise wird dieser durch ein Blech realisiert, das ein geradliniges Hereinfliegen von Öltröpfchen in die rohrförmige Entlüftung 10 verhindert. Außerdem weist die Entlüftung mittig oder an ihrem anderen Endbereich eine Membran auf, die einen Luftaustausch ermöglicht, nicht jedoch einen Flüssigkeitsaustausch. Insbesondere wird ein Durchdringen der Membran von Öl oder Wasser verhindert. Hierzu ist das Material der Membran oleophob und/oder lipophob und hydrophob.

Durch die Aufteilung des Adapters in Motoradapter 3 und Getriebeadapter 4 ist wiederum ermöglicht, dass eine motorseitige Schnittstelle geschaffen ist, an der verschiedene Motoren verbindbar sind und dass eine getriebeseitige Schnittstelle geschaffen ist, an der verschiedene Getriebe verbindbar sind.

Die Schnittstelle zwischen Motoradapter 3 und Getriebeadapter 4 bleibt jedoch für alle Varianten, also Getriebe- Motor-Kombinationen, gleich. Dabei umfasst die Schnittstelle ein Zentriermittel, wie Zentrierbund oder dergleichen, ein Bohrbild für Verbindungsschrauben.

Beispielsweise ist ein erster Motor 1 größer als ein zweiter Motor 1, wobei jeder der Motoren 1 an einen jeweiligen Motoradapter 3 verbunden wird, der zum Getriebeadapter 4 jeweils eine gleichartige Schnittstelle aufweist, zum jeweiligen Motor 1 jedoch eine verschiedenartige Schnittstelle, so dass der jeweilige Motor 1 verbindbar ist.

Ebenso ist ein erstes Getriebe 6 größer als ein zweites Getriebe 6, wobei jedes der Getriebe 6 an einen jeweiligen Getriebeadapter 4 verbunden wird, der zum Motoradapter 3 jeweils eine gleichartige Schnittstelle aufweist, zum jeweiligen Getriebe 6 jedoch eine verschiedenartige Schnittstelle, so dass der jeweilige Motor 1 verbindbar ist.

Insgesamt sind im Beispiel somit vier Getriebe-Motor-Kombinationen ausführbar.

Der Adapter ist somit derart ausgeführt, dass er nach außen geöffnet ist. Daher ist auch ein Lüfter mit der eintreibenden Welle, mit der Rotorwelle oder einer vom Adapter umgebenen Welle, drehfest verbindbar. Die Luftzufuhr und Luftabfuhr erfolgt dann durch entsprechend vorzusehende Öffnungen im Adaptergehäuse, insbesondere also im Getriebeadapter 4.

Bei einem weiteren erfindungsgemäßen Ausführungsbeispiel ist am Ölausgleichsbehälter 32 auch ein Sichtfenster anordenbar, mit dem der Ölstand kontrollierbar ist.

Das Fenster deckt eine Ausnehmung des Ölausgleichsbehälters 32 ab und ist mit dem Ölausgleichsbehälter 32 öldicht verbunden, insbesondere schraubverbunden mit zwischengeordneter Dichtung, insbesondere O-Ringdichtung oder Flachdichtung.

### Bezugszeichenliste

1 Elektromotor
2 öldichte Verbindung
3 Motoradapter
4 Getriebeadapter, insbesondere Laterne
5 Sichtfenster
6 Getriebe
7 Ölablass
8 Verzahnung auf eintreibender Welle, insbesondere mit der eintreibenden Welle drehfest verbundenes Ritzel
9 Lager
10 Entlüftungsteil
11 öldichte Verbindung
12 Kupplungsteil
20 Abdichtung
30 eintreibende Welle
31 Verbindungsleitung für Luft
32 Ölausgleichsbehälter
33 Ölpegel
34 Verbindungsleitung für Öl

## Patentansprüche

1. Antrieb,
aufweisend ein Getriebe (6), dessen eintreibende Welle (30) von einem Elektromotor (1)antreibbar ist,
wobei zwischen Elektromotor (1)und Getriebe (6) ein Adapter angeordnet ist, der **als Gehäuseteile einen Motoradapter (3) und einen Getriebeadapter (4)** aufweist,
wobei die eintreibende Welle (30) in einem Gehäuseteil **des Adapters,** gelagert ist mittels eines im Gehäuseteil aufgenommenen Lagers (9),
**dadurch gekennzeichnet, dass**
**der Getriebeadapter (4)** öldicht verbunden ist mit dem Getriebegehäuse **mittels einer Dichtung, insbesondere O-Ring oder Flachdichtung,,**
**wobei der Motoradapter (3) und der Getriebeadapter (4) miteinander verbunden sind mittels Schraubverbindungen, wobei eine zwischen Motoradapter (3) und Getriebeadapter (4) angeordnete Dichtung, insbesondere O-Ring oder Flachdichtung, die Öldichtheit herstellt,**
**wobei das Motorgehäuse mit dem Motoradapter (3) ebenso öldicht** schraubverbunden **ist,**
wobei eine Kupplung vom Motoradapter (3) und/oder Getriebeadapter (4) zumindest teilweise geschützt umgeben ist,
wobei der Ölpegel (33) im Adapter höher angeordnet ist als das höchst gelegene Lager (9) des Getriebes (6) und höher als der am höchsten im Eingriffsbereich zweier miteinander im Eingriff stehenden Verzahnungen des Getriebes (6),
**wobei im Getriebeadapter (4)** oberhalb des Ölpegels (33) eine Entlüftung angeordnet ist,
**wobei die Entlüftung vom Innenluftbereich des Adapters zur äußeren Umgebung hin entlüftet,**
**wobei die Entlüftung eine Membran aufweist, die luftdurchlässig ist,**
**wobei der Adapter als Ölausgleichsbehälter fungiert.**

2. Antrieb,
aufweisend ein Getriebe (6), dessen eintreibende Welle (30) von einem Elektromotor (1)antreibbar ist,
wobei zwischen Elektromotor (1)und Getriebe (6) ein Adapter angeordnet ist, der **als Gehäuseteile einen Motoradapter (3) und einen Getriebeadapter (4)** aufweist,
wobei die eintreibende Welle (30) in einem Gehäuseteil, gelagert ist mittels eines im Gehäuseteil aufgenommenen Lagers (9),
**wobei eine Kupplung vom Motoradapter (3) und/oder Getriebeadapter (4) zumindest teilweise geschützt umgeben ist,**
**dadurch gekennzeichnet, dass**
eine Abdichtung (20), zwischen dem Gehäuseteil und der eintreibenden Welle (30) den Innenraum des Getriebes (6) abdichtet gegen den Innenluftbereich des Adapters,
wobei die Abdichtung (20) im Ölspritzbereich von miteinander kämmenden Verzahnungen des Getriebes (6) angeordnet ist,
wobei eine erste Verbindungsleitung (31) für Luft zwischen einem Innenluftbereich eines Ölausgleichsbehälters und einem Luftbereich des Getriebes (6) angeordnet ist,
der im Innenraum des Getriebes (6) angeordnet ist,
wobei der Luftbereich unterhalb der Abdichtung (20) und oberhalb des am höchsten angeordneten Lagers (9) des Getriebes (6) und oberhalb des am höchsten angeordneten Eingriffsbereichs zweier miteinander im Eingriff stehenden Verzahnungen des Getriebes (6) angeordnet ist,
wobei der Ölpegel (33) des Getriebeschmieröls unterhalb des Luftbereichs angeordnet ist,
wobei die erste Verbindungsleitung (31) in den Luftbereich des Getriebes (6) mündet und mit ihrem anderen Ende in den Innenluftbereich des Ölausgleichsbehälters,
wobei eine zweite Verbindungleitung für Öl den ölbefüllten Innenraumbereich des Getriebes (6) verbindet nach dem Prinzip der kommunizierenden Röhre mit dem Innen Raumbereich des Ölausgleichsbehälters.
wobei in dem Ölausgleichsbehälter eine Entlüftung angeordnet ist,
**wobei die Entlüftung vom Innenluftbereich des Ölausgleichsbehälters zur äußeren Umgebung hin entlüftet,**
**wobei die Entlüftung eine Membran aufweist, die luftdurchlässig ist.**

3. Antrieb nach einem der vorangegangenen Ansprüche,
**dadurch gekennzeichnet, dass**
die Membran oleophob und/oder lipophob und/oder hydrophob ist.

4. Antrieb nach einem der vorangegangenen Ansprüche,
**dadurch gekennzeichnet, dass**
die Entlüftung ein Spritzschutzmittel aufweist, insbesondere ein Blechstück, das vor einem rohrförmigen Abschnitt der Entlüftung derart angeordnet ist, dass kein geradliniges Eintreten oder Austreten in den rohrförmigen Abschnitt ausführbar ist,
**wobei das Spritzschutzmittel zwischen dem Innenluftbereich und der Membran angeordnet ist.**

5. Antrieb nach einem der vorangegangenen Ansprüche,
**dadurch gekennzeichnet, dass**
die Kupplung die Rotorwelle des Elektromotors mit der eintreibenden Welle (30) des Getriebes (6) verbindet.

6. Antrieb nach einem der vorangegangenen Ansprüche,
**dadurch gekennzeichnet, dass**
an einem Gehäuseteil des Adapters ein Sichtfenster (5) angeordnet ist.

7. Antrieb nach einem der vorangegangenen Ansprüche,
**dadurch gekennzeichnet, dass**
am unteren Endbereich des Getriebegehäuses ein Ölauslass angeordnet ist
und/oder dass die Gravitationsrichtung parallel zur Achse der eintreibenden Welle (30) des Getriebes (6) ist.

8. Antrieb nach einem der vorangegangenen Ansprüche,
**dadurch gekennzeichnet, dass**
das Getriebe (6) zum Adapter hin keine für Öl wirksame Abdichtung (20) aufweist und/oder dass der Innenraum des Getriebes (6) und der Innenraum des Adapters im Ölaustausch steht.

## Claims

1. A drive,
having a transmission (6), the input shaft (30) of which can be driven by an electric motor (1),
wherein an adapter is arranged between the electric motor (1) and transmission (6), which adapter has as housing parts a motor adapter (3) and a transmission adapter (4),
wherein the input shaft (30) is mounted in a housing part of the adapter, by means of a bearing (9) accommodated in the housing part,
**characterised in that**
the transmission adapter (4) is connected in oil-tight manner to the transmission housing by means of a seal, in particular O-ring or flat seal,
wherein the motor adapter (3) and the transmission adapter (4) are connected together by means of screw connections, wherein a seal arranged between the motor adapter (3) and transmission adapter (4), in particular O-ring or flat seal, brings about the oil-tightness,
wherein the motor housing is likewise screw-connected in oil-tight manner to the motor adapter (3),
wherein a coupling is surrounded at least in part in protected manner by the motor adapter (3) and/or transmission adapter (4),
wherein the oil level (33) in the adapter is arranged higher than the highest-located bearing (9) of the transmission (6) and higher than the highest in the region of engagement of two sets of gearing of the transmission (6) which are engaged with each other [sic],
wherein a venting means is arranged in the transmission adapter (4) above the oil level (33),
wherein the venting means vents from the internal air region of the adapter to the outer surroundings,
wherein the venting means has a membrane which is air-permeable,
wherein the adapter acts as an oil reservoir.

2. A drive,
having a transmission (6), the input shaft (30) of which can be driven by an electric motor (1),
wherein an adapter is arranged between the electric motor (1) and transmission (6), which adapter has as housing parts a motor adapter (3) and a transmission adapter (4),
wherein the input shaft (30) is mounted in a housing part, by means of a bearing (9) accommodated in the housing part,
wherein a coupling is surrounded at least in part in protected manner by the motor adapter (3) and/or transmission adapter (4),
**characterised in that**
a sealing means (20) between the housing part and the input shaft (30) seals off the interior of the transmission (6) from the internal air region of the adapter,
wherein the sealing means (20) is arranged in the oil splash region of meshing sets of gearing of the transmission (6),
wherein a first connecting line (31) for air is arranged between an internal air region of an oil reservoir and an air region of the transmission (6) which is arranged in the interior of the transmission (6),
wherein the air region is arranged beneath the sealing means (20) and above highest-arranged bearing (9) of the transmission (6) and above the highest-arranged region of engagement of two sets of gearing of the transmission (6) which are engaged with each other,
wherein the oil level (33) of the transmission lubricating oil is arranged beneath the air region,
wherein the first connecting line (31) opens into the air region of the transmission (6) and with its other end into the internal air region of the oil reservoir,
wherein a second connecting line for oil connects the oil-filled interior region of the transmission (6) in accordance with the principle of communicating tubes to the interior region of the oil reservoir,
wherein a venting means is arranged in the oil reservoir,
wherein the venting means vents from the internal air region of the oil reservoir to the outer surroundings,
wherein the venting means has a membrane which is air-permeable.

3. A drive according to one of the preceding claims,
**characterised in that**
the membrane is oleophobic and/or lipophobic and/or hydrophobic.

4. A drive according to one of the preceding claims,
**characterised in that**
the venting means has a splash protection means, in particular a sheet-metal piece, which is arranged in front of a tubular portion of the venting means such that no rectilinear entry into or emergence from the tubular portion can be carried out,
wherein the splash protection means is arranged between the internal air region and the membrane.

5. A drive according to one of the preceding claims,
**characterised in that**
the coupling connects the rotor shaft of the electric motor to the input shaft (30) of the transmission (6).

6. A drive according to one of the preceding claims,
**characterised in that**
an inspection window (5) is arranged on a housing part of the adapter.

7. A drive according to one of the preceding claims,
**characterised in that**
an oil outlet is arranged at the lower end region of the transmission housing
and/or **in that** the direction of gravity is parallel to the axis of the input shaft (30) of the transmission (6).

8. A drive according to one of the preceding claims,
**characterised in that**
the transmission (6) towards the adapter does not have any sealing means (20) effective for oil, and/or **in that** the interior of the transmission (6) and the interior of the adapter are in an oil exchange.

## Revendications

1. Entraînement
équipé d'une transmission (6) dont l'arbre d'entrée (30) peut être entraîné par un moteur électrique (1),
un adaptateur, interposé entre le moteur électrique (1) et la transmission (6), comprenant un adaptateur (3) affecté audit moteur et un adaptateur (4) affecté à ladite transmission, qui constituent des parties d'un carter,
l'arbre d'entrée (30) étant monté dans une partie du carter de l'adaptateur au moyen d'un palier (9) logé dans ladite partie du carter,
**caractérisé par le fait que**
l'adaptateur (4), affecté à la transmission, est relié au carter de ladite transmission avec étanchéité à l'huile au moyen d'une garniture d'étanchement, en particulier d'une bague torique ou d'une garniture d'étanchement aplatie,
l'adaptateur (3) affecté au moteur, et ledit adaptateur (4) affecté à la transmission, étant reliés l'un à l'autre au moyen de liaisons vissées, sachant qu'une garniture d'étanchement, notamment une bague torique ou une garniture d'étanchement aplatie intercalée entre ledit adaptateur (3) affecté au moteur et ledit adaptateur (4) affecté à la transmission, instaure l'étanchéité à l'huile,
le carter du moteur étant relié par vissage audit adaptateur (3) affecté audit moteur, pareillement avec étanchéité à l'huile,
sachant qu'un accouplement est entouré, avec protection au moins partielle, par ledit adaptateur (3) affecté au moteur et/ou par ledit adaptateur (4) affecté à la transmission,
le niveau d'huile (33), dans l'adaptateur, étant situé plus haut que le palier (9) de la transmission (6) qui occupe la position la plus haute, et plus haut que le niveau de hauteur maximale dans la zone de venue en prise de deux dentures de la transmission (6) engrenant l'une dans l'autre,
un évent étant disposé au-dessus du niveau d'huile (33), dans ledit adaptateur (4) affecté à la transmission,
lequel évent assure une ventilation vers l'environnement extérieur, à partir du volume d'air intérieur dudit adaptateur,
ledit évent étant muni d'une membrane perméable à l'air,
ledit adaptateur remplissant la fonction d'un vase de compensation d'huile.

2. Entraînement
équipé d'une transmission (6) dont l'arbre d'entrée (30) peut être entraîné par un moteur électrique (1),
un adaptateur, interposé entre le moteur électrique (1) et la transmission (6), comprenant un adaptateur (3) affecté audit moteur et un adaptateur (4) affecté à ladite transmission, qui constituent des parties d'un carter,
l'arbre d'entrée (30) étant monté dans une partie du carter au moyen d'un palier (9) logé dans ladite partie du carter,
un accouplement étant entouré, avec protection au moins partielle, par ledit adaptateur (3) affecté au moteur et/ou par ledit adaptateur (4) affecté à la transmission,
**caractérisé par le fait**
**qu'**un joint d'étanchement (20) assure, entre la partie du carter et l'arbre d'entrée (30), l'étanchéité de l'espace interne de la transmission (6) par rapport au volume d'air intérieur de l'adaptateur,
ledit joint d'étanchement (20) étant disposé dans la zone de pulvérisation d'huile de dentures de ladite transmission (6) qui engrènent mutuellement,
sachant qu'un premier conduit de jonction (31), dédié à l'air, est interposé entre un volume d'air intérieur d'un vase de compensation d'huile et un volume d'air de la transmission (6) qui est situé dans l'espace interne de ladite transmission (6),
lequel volume d'air se trouve au-dessous du joint d'étanchement (20), au-dessus du palier (9) de la transmission (6) qui occupe la position la plus haute, et au-dessus de la zone, de hauteur maximale, de venue en prise de deux dentures de ladite transmission (6) engrenant l'une dans l'autre,
le niveau (33) de l'huile de lubrification de ladite transmission étant situé au-dessous dudit volume d'air,
sachant que ledit premier conduit de jonction (31) débouche dans ledit volume d'air de la transmission (6) et, par son autre extrémité, dans le volume d'air intérieur du vase de compensation d'huile,
sachant qu'un second conduit de jonction, dédié à l'huile, raccorde la zone d'espace interne de la transmission (6), emplie d'huile, à la zone d'espace interne dudit vase de compensation d'huile, selon le principe des tubes communicants,
un évent étant disposé dans ledit vase de compensation d'huile,
lequel évent assure une ventilation vers l'environnement extérieur, à partir du volume d'air intérieur dudit vase de compensation d'huile,
ledit évent étant pourvu d'une membrane perméable à l'air.

3. Entraînement selon l'une des revendications précédentes,
**caractérisé par le fait que**
la membrane est oléophobe et/ou lipophobe et/ou hydrophobe.

4. Entraînement selon l'une des revendications précédentes,
**caractérisé par le fait que**
l'évent est doté d'un moyen de protection anti-projections, en particulier d'une pièce en tôle occupant, devant une région tubulaire dudit évent, un emplacement propre à empêcher une pénétration ou une sortie en ligne droite dans ladite région tubulaire, et hors de celle-ci,
ledit moyen de protection anti-projections étant interposé entre le volume d'air intérieur et la membrane.

5. Entraînement selon l'une des revendications précédentes,
**caractérisé par le fait que**
l'accouplement relie l'arbre rotorique du moteur électrique à l'arbre d'entrée (30) de la transmission (6).

6. Entraînement selon l'une des revendications précédentes,
**caractérisé par le fait**
**qu'**une fenêtre d'observation (5) se trouve sur une partie du carter de l'adaptateur.

7. Entraînement selon l'une des revendications précédentes,
**caractérisé par le fait**
**qu'**une sortie d'huile est ménagée au niveau de la région extrême inférieure du carter de la transmission ;
et/ou par le fait que la direction de la gravité est parallèle à l'axe de l'arbre d'entrée (30) de ladite transmission (6).

8. Entraînement selon l'une des revendications précédentes,
**caractérisé par le fait que**
la transmission (6) ne comporte, en direction de l'adaptateur, aucun joint d'étanchement (20) efficace vis-à-vis de l'huile ; et/ou **par le fait que** l'espace interne de ladite transmission (6) et l'espace interne dudit adaptateur sont le siège d'un échange d'huile.
